# EUROPEAN PATENT APPLICATION

(11) **EP 0 538 264 A1**
(43) Date of publication of application: **28.04.1993**
(21) Application number: 91908832.8
(22) Date of filing: 26.04.1991
(51) Int. Cl.: C02F 1/04, B01D 3/34, B01D 3/06, B01D 5/00

(54) **METHOD AND APPARATUS FOR SEAWATER POTABILIZATION**

(71) Applicant: LUMBRERAS y GIMENEZ, Manuel, E-28023 Madrid (ES)
(72) Inventor: LUMBRERAS y GIMENEZ, Manuel, E-28023 Madrid (ES)
(74) Representative: Patentanwälte Beetz - Timpe - Siegfried Schmitt-Fumian - Mayr
(86) International application number: ES9100026
(87) International publication number: WO9219542

(57) **Abstract**

Method and apparatus for seawater potabilization, wherein saline water is resolved by atomizing process, through mixing with compressed air in droplets of maximum 3 microns of diameter, which are projected at a velocity close to that of the sound, injecting them in an environmental air drag area where the droplets loose the water by evaporation within a small distance from the ejection point thereby causing the salt particles to precipitate completely out of the solution. The generated water vapor condenses thereby forming a suspension of fresh water droplets inside a chamber till the fresh water suspension is evacuated from the environmental space to containers prepared to receive the droplets and where the suspension precipitates in order to collect the resulting fresh water flow. All the process is carried out at environmental temperature.

## Description

The present invention relates to desalination or potabilization of saltwater and, more particularly to a method of an apparatus for desalination and fresh water recovery which does not require to heat the water for its evaporation.

Conventional desalination techniques include vaporization of saltwater by heating until its boiling point and subsequent condensation of the water vapor. These processes have very high thermal energy requirements; typically more than 2.000 joules per gram of water are required to vaporize the water. Therefore, in order to be economical, conventional desalination processes require that as much heat as possible be recovered during the condensation phase of the water vapor. Complete heat recovery is impossible and even the best designed vertical tube evaporators and flash distillation units require at least 30 joules per gram of water. This is far above a theoretical minimum value of less than two joules per gram of water for removing salt out of solution.

The only way to eliminate the heat loss caused by imperfect heat recovery during the condensation stage of the conventional desalination techniques, would be by vaporizing the salt water without heating it.

Conventional separation processes, drying techniques, etc., of the prior art are exemplified by the patents mentioned below. Suffice it to say that these patents show processes utilizing high temperature gaseous stream or beds of high temperature solids carrying large quantities of heat to vaporize the liquid or aquous component of the system being treated. Thus, the patent discloses, or have reference to, such conventional methods as spray drying, prilling, fluid bed drying techniques, etc.

A technique for atomizing the saltwater disclosed in one patent is the use of an atomizing nozzle through which air and water flow under high pressure. The patent teaches an air to water mass flow ration of about 17:1 and about 40:1. The high mass of the air relative to the mass of water flowing through the atomizing nozzle limits the mass flow rate of the water and thus the volume of fresh water that can be collected. Additionally, the patent disclosure is directed toward the recovery of the dissolved salt or other solute, and teaches the recovery of fresh water simply by placing a collection screen in the flow path of the water droplets. There is not structure or technique disclosed for maximizing the amount of fresh water recovered.

This process described in that patent has limitations when used for the desalination of sea water, a principal application of the present invention. The use of large masses of compressed air for each mass of water requires the consumption of energy in amounts greater than that needed for conventional (multi-stage flash distillation) desalination processes. In addition, the movement of the water in the form of water vapor mixed with much larger masses of air requires a very large apparatus with high capital costs. Finally, the necessity for condensating the water by cooling the air-water vapor mixture adds other capital and energy requirements.

The process object of this invention avoids these problems by atomizing water using only small amounts of compressed air, about one mass of air for every ten masses of water, thus greatly reducing the energy required. In addition, by deliberately not supplying sufficient air for the water to remain in the vapor phase, we ensure that the fresh water is transported in the form of a liquid water mist. Such a mist is much more compact than a water-vapor-air mixture, allowing the use of much smaller appatatus at much reduced capital cost.

Finally, since the water is already in liquid phase, condensation by cooling a water-vapor-air mixture is not required. Any suitable recovery means for the mist may be used, such as washing the water mist out of the air with a large droplet fresh water spray.

US patents documets used as references are:

| | | | |
|---|---|---|---|
| 1.962.781 | 6/1934 | MacLachlan | 159/4S |
| 2.887.390 | 5/1959 | Coulter et al | 158/48R |
| 3.039.107 | 6/1962 | Bradford | 159/48R |
| 3.432.636 | 3/1969 | Sargeant | 159/DIO26 |
| 3.562.768 | 2/1971 | Edquist et al | 159/48R |
| 4.323.424 | 4/1982 | Secunda et al | 159/9R |

### OBJECT OF THE INVENTION

An object of the present invention is to provide a method of an apparatus for desalination and fresh water recovery which does not require heat vaporization of saltwater.

Another object of the invention is to provide a method of an apparatus for desalination and fresh water recovery which does not require cooling of water vapor in order to generate useable quantities of fresh water.

Another object of the present invention is to provide a method of an apparatus for desalination and fresh water recovery having a low total energy and capital requirement.

### SUMMARY OF THE INVENTION

According to the invention, saltwater is atomized and small droplets are injected into a closed space mixed with compressed air moving at sufficiently high velocity to cause the saltwater droplets to vaporize. The water vapor thus generated instantaneously condenses to form a suspension of fresh water droplets. The process continues until the atmosphere within the space is near saturation, or actually becomes supersaturated, with a suspension of fresh water droplets. The water droplet suspension is then evacuated from the space and precipitated to recover the fresh water. The entire process is conducted at ambient temperature in the absence of any added heat.

The fresh water droplet suspension is evacuated by generating a flow of air through the space for transporting the fresh water droplet suspension out of the space at a controlled rate to maintain the fresh water droplets in suspension. The fresh water droplets are transported through a recovery path in which precipitation of the fresh water is carried out.

Precipitation is carried out by flowing the fresh water droplet suspension through the recovery path, and spraying fresh water in large droplets into the recovery path to provide nucleation sites for the small fresh water droplets. The precipitated fresh water is then collected.

### BRIEF DESCRIPTION OF THE DRAWINGS

- FIGURE 1.-: Represent a side view of an apparatus to potabilize seawater according to the invention.
- FIGURE 2.-: Is a top view of the same apparatus.

### DETAILED DESCRIPTION OF THE INVENTION

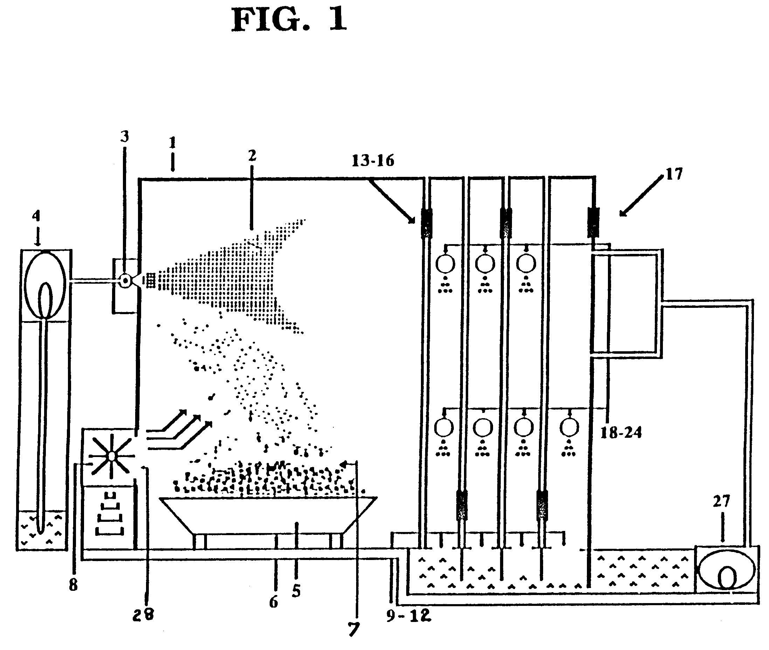

An apparatus according to the invention is illustrated in figure 1 and includes a chamber 1 which receives a spray 2 of saltwater and compressed air injected into the chamber 1 by a nozzle 3. The nozzle 3 has an orifice which opens into the chamber 1, and saltwater and compressed mixture is pumbed through the nozzle 3 by a pump 4 giving the compressed air a velocity sufficiently high so that saltwater droplets of the spray 2 progressively vaporize within the chamber 1. As the saltwater droplets vaporize, dissolved impurities and salts in the seawater precipitate out of the vaporizing seawater droplets and are received by a collector 5 at the bottom of the chamber. The collector 5 sits on top of a transport device 6 that carries the accumulated precipitate out of the chamber 1 for its removal and disposal.

The water vapor remaining within the chamber 1 will condense to form suspended droplets of pure or fresh water. A resultant fresh water droplet suspension will accumulate above the saltwater spray 2 and is removed from the chamber 1. A blower 8 develops an air flow in the chamber 1 for evacuating the accumulated fresh water droplet suspension from the chamber 1, and the blower can be operated continuosly or intermittently as required. Operation of the blower creates a flow of air within the chamber 1 in a direction indicated by arrows. This flow of air is sufficient to carry with it thw accumulated fresh water droplets but it is not so strong as to carry the precipitate. The flow of air throgh the chamber 1 can be controlled by operation of the blower 8 and dampers 28 between the blower 8 and the interior of chamber 1.
The chamber 1 is in communication with a series of vertical ducts 9-12 which are in communication and define a flow path for the fresh water droplet suspension evacuated from the chamber 1. The series of ducts 9-12 include intake backdraft dampers 13 to 16 for controlling flow between succesive ducts, and an exhaust backdraft damper 17 for controlling flow out of the last duct 12. A plurality of nozzles 18-24 are disposed within the ducts 9-12. The nozzles 18-24 spray fresh water into the ducts, and the fresh water sprays from the nozzles are respectively represented by lines as those identified by reference numeral 25 for nozzle 18. The nozzles 18-24 are selected and positioned to provide a distribution of fresh water droplet sizes which are effective to provide nucleation sites within the fresh water droplet suspension evacuated from the chamber 1 and transported through the ducts 9-12 by the flow of air.

The suspended fresh water droplets will nucleate on the fresh water droplets sprayed by the nozzles 18-24 and will precipitate within the ducts 9-12 and accumulate at the bottom thereof. The accumulated fresh water at the bottom of the ducts 9-12 can be recovered and stored in any inconvenient manner. A pump 27 is provided for removing stored fresh water and pumping it back to the nozzles to maintain the fresh water spray within the ducts.

The apparatus according to the invention is operated in the following manner. Saltwater is continually sprayed into chamber 1 in order to accumulate a suspension of fresh water droplets.

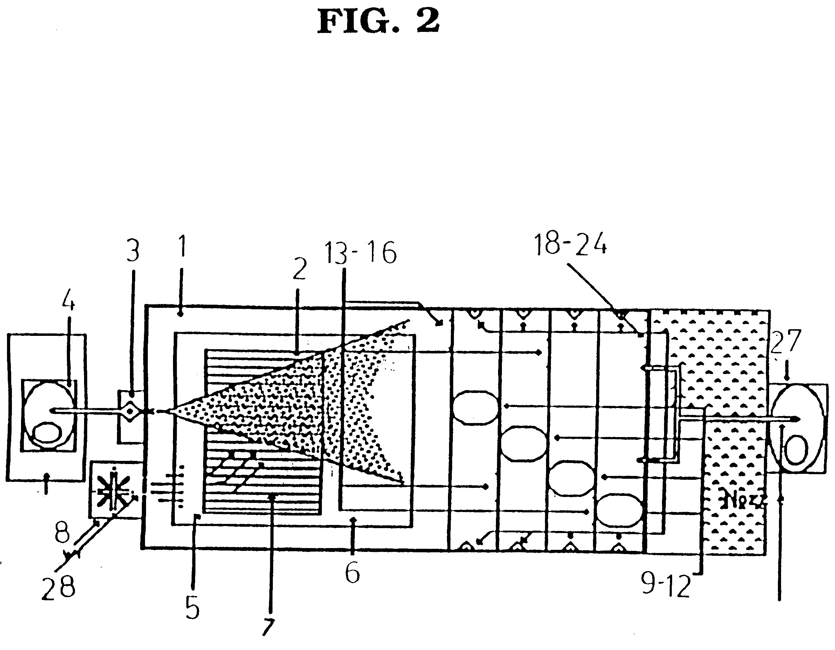

A second embodiment of an apparatus according to the invention is illustrated in figure 2 wherein like structural elements are identified by like reference numerals. In this embodiment the chamber 1 has a converging upper portion in communication with the series of ducts 9-12 and a converging bottom portion 5 defining a salt collector. A saltwater spray 2 is developed within the chamber 1 in the manner described above. Salt and impurities precipitate and fall downwardly into the collector 5. The accumulated salt 7 is then removed by a device 6 at the bottom of the salt collector 5.

The following summary is believed to be a description of the physical mechanism by which the suspension of fresh water droplets is created.

The air exits nozzle at high velocity, approaching sonic speed. The water, having high mass relative to the air is not instantly accelerated to the same velocity. The air therefore maintains a high velocity relative to the droplets of salt water exiting the nozzle. As a result of this high relative air velocity, microscopic zones of low pressure are formed in the wake of each droplet or group of droplets. At sufficiently high relative velocity, these zones have pressure sufficiently low to allow the salt water droplets to evaporate, even if the air within the chamber is saturated while at ambient pressure. The droplets than evaporate, leaving behind salt particles that precipitate. As the vapor leaves the microscopic regions of low pressure, it joins the saturated air and instantly condenses as fresh water droplets.

When the concentration of fresh water droplets within the chamber 1 is sufficient to initiate precipitation, or somewhat before concentration, the blower 8 is operated to develop the flow of air that evacuates the fresh water droplet suspension from the chamber 1 and flows it through the series of ducts 9-12 where the fresh water droplet suspension interacts with the fresh water spray and precipitates. After the fresh water droplet suspension has been evacuated from the chamber 1, the blower 8 is turned off and accumulation of a fresh water droplet suspension within the chamber begins again.

For a 14,5 cubic meter (515 c.feet) chamber, it should be possible to accumulate a fresh water droplet suspension having a concentration of 1-2% of the volume of chamber 1 before evacuation of the chamber is required. To effectuate rapid evacuation of the fresh water droplet suspension from the chamber 1 the saltwater spray may be terminated in order to allow use of a fast air flow for evacuating the chamber.

The nozzle 3 may have an orifice diameter between 0,5 and 3,0 mm (0,20 and 0,120 inches) for developing saltwater droplets having diameters of the order of 1 to 30 microns. Alternatively, a plurality of nozzles may be used together. For a cluster of twenty five nozzles the pump 4 should have a constant speed rate of the order of 9,5 liters/min (2,5 gal/min) at the operating pressure of the order of 5Kg/cm2 (75 psi) with each nozzle flowing about 0,39 liters/min (0,1 gal/min) at 5 Kg/cm2.

The compressed air sprayed by the nozzled 3 must have a minimum velocity of the order of 200 meters/sec in order to vaporize. To enhance formation of small saltwater droplets compressed air is injected into the liquid flow to the nozzle 3 in amounts such that air to water flow ratio is about 1:30.

The chamber 1 and the walls of the ducts 9-12 are made of metacrilate (plexiglass). The chamber 1 is a cube 1,8 m (6 feet) on one side and the ducts measure 30 cm by 1,8 m (one foot by six feet). The blower 8 has a flow rate of the order of 1,4 to 2,8 cubic meters/min (50 to 100 cubic feet/min) at a pressure of one atmosphere.

Having described the invention so that it may be understood and practiced by one skilled in the art.

## Claims

1. A method of saltwater desalination and fresh water recovery, comprising:
injecting a mixture of saltwater droplets and compressed air, without heating the droplets, into a chamber at sufficiently high velocity to progressively vaporize the saltwater droplets for effectuating precipitation of dissolved impurities and salts from the vaporizing saltwater droplets and accummulation of a fresh water droplet suspension within the chamber;
evacuating the accumulated fresh water droplet suspension from the chamber by flowing the fresh water droplet suspension out of the chamber at a controlled flow rate to maintain the fresh water droplets in suspension;
precipitating fresh water droplets from the evacuated fresh water droplet suspension; and
collecting the fresh water.

2. A method, according to claim 1, wherein the step of spraying saltwater droplets comprises flowing saltwater and compressed air through a nozzle at a sufficiently high velocity to develop a spray of progressively vaporizing saltwater droplets.

3. A method according to claim 1, wherein the step of evacuating the accumulated fresh water droplet suspension comprises:
generating a flow of air through the chamber for transporting the accumulated fresh water droplet suspension out of the chamber; and
flowing the fresh water suspension through a series of ducts at a controlled flow rate.

4. A method according to claim 1, wherein the step of spraying saltwater into the chamber and the step of evacuating the accumulated fresh water droplet suspension from the chamber are carried out simultaneously to permit simultaneous desalination of saltwater within the chamber and precipitation of fresh water outside of the chamber.

5. A method according to claim 1, wherein the step of spraying saltwater into the chamber and the step of evacuating the accumulated fresh water droplet suspension from the chamber are carried out intermittently and successively to repeatedly first accumulate a fresh accumulation of a fresh water droplet suspension within the chamber begins again.

6. A method according to claim 1, wherein the atmosphere within the chamber is at least nearly saturated.

7. A method according to claim 1, wherein air and saltwater flow though the nozzle with a mass flow ration about 1:10 to develop a spray of saltwater droplets.

8. An apparatus for desalinating water and recovering freshwater, comprising:
a chamber;
means for ejecting saltwater droplets without heating the droplets into said chamber at a sufficiently high velocity to progressively vaporize the droplets for effectuating precipitation of disolved impurities and salts from the water droplets and accumulation of a fresh water droplet suspension within the chamber;
means for evacuating the fresh water droplet suspension from said chamber;
means for precipitating fresh water droplets from the accumulated fresh water droplet suspension; and
means for collecting the precipitated fresh water.

9. An apparatus according to claim 1, wherein said means for spraying comprises:
a nozzle having an aperture opening into said chamber; and means for flowing saltwater though said nozzle at a sufficiently high velocity to develop within said chamber a spray of progressively vaporizing droplets.

10. An apparatus according to claim 1, wherein said means for evacuating comprises:
a series of ducts communicating with said chamber for flowing the fresh water droplet suspension out of said chamber, including means for controlling the flow rate of the fresh water droplet suspension through said ducts; and
means for generating a flow of air through said chamber for transporting the accumulated fresh water droplet suspension out of said chamber and through said ducts.
